# EUROPÄISCHE PATENTSCHRIFT

(11) **EP 2 989 743 B1**
(45) Veröffentlichungstag und Bekanntmachung des Hinweises auf die Patenterteilung: **26.08.2020**
(21) Anmeldenummer: 14739771.5
(22) Anmeldetag: 10.07.2014
(51) Int. Cl.: H04L 9/08, H04L 9/32, H04L 29/06, H04W 12/06

(54) **VERFAHREN UND SYSTEM ZUR GESCHÜTZTEN GRUPPENKOMMUNIKATION MIT SENDER-AUTHENTISIERUNG**
METHOD AND SYSTEM FOR PROTECTED GROUP COMMUNICATION WITH TRANSMITTER AUTHENTICATION
PROCÉDÉ ET UN SYSTÈME DE COMMUNICATION DE GROUPES PROTÉGÉE

(30) Priorität: 07.08.2013 DE 102013215577
(43) Veröffentlichungstag der Anmeldung: 02.03.2016
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2014/064790
(87) Internationale Veröffentlichungsnummer: WO 2015/018594

(56) Entgegenhaltungen:
- ROCA A FRANCILLON S FAURITE INRIA V: "Use of TESLA in the ALC and NORM Protocols; draft-ietf-msec-tesla-for-alc-norm-07.txt" , USE OF TESLA IN THE ALC AND NORM PROTOCOLS; DRAFT-IETF-MSEC-TESLA-FOR-ALC-NORM-07.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, Bd. msec, Nr. 7, 18. Dezember 2008 (2008-12-18), XP015061117,
- CHALLAL Y ET AL: "A taxonomy of multicast data origin authentication: Issues and solutions", IEEE COMMUNICATIONS SURVEYS, IEEE, NEW YORK, NY, US, Bd. 2, Nr. 3, 1. Juli 2004 (2004-07-01), Seiten 34-57, XP011285495, ISSN: 1553-877X
- IETF MSEC PERRIG ET AL: "TESLA: Multicast Source Authentication Transform Specification; draft-ietf-msec-tesla-spec-00.txt", 20021027, Bd. msec, 27. Oktober 2002 (2002-10-27), XP015002821, ISSN: 0000-0004

## Beschreibung

Die Erfindung bezieht sich auf ein Verfahren und ein System zur geschützten Gruppenkommunikation mit Sender-Authentisierung innerhalb einer Gruppe von Sende- und/oder Empfangsknoten innerhalb der Multicast-Nachrichten von einem Sendeknoten an eine Mehrzahl von Empfangsknoten gesendet werden.

In Automatisierungsumgebungen wie zum Beispiel der Industrieautomatisierung oder der Energieautomatisierung, werden zur Kommunikation in einem Steuerungsnetzwerk häufig Broadcast- oder Multicast-Nachrichten von einem Sender an eine Mehrzahl an Empfänger eingesetzt. Bei einer Broadcast-Nachricht sind alle Empfangsknoten, die sich beispielsweise in einer Reichweite einer Antenne befinden, potenzielle Empfänger der Nachricht. Bei einer Multicast-Nachricht werden die Empfänger auf eine geschlossene Empfängergruppe begrenzt. In Kommunikationsnetzen, die das Internetprotokoll Version 6 (IPv6) unterstützen, ist auch eine Anycast-Kommunikation möglich, bei der eine Nachricht von einer Mehrzahl von Empfängern empfangen werden kann, aber lediglich der Empfänger, der über die kürzeste Route erreichbar ist, sendet eine Antwortnachricht an den Sender zurück. Als Zieladresse wird dabei eine Broadcastbeziehungsweise Multicast- beziehungsweise Anycast-Adresse verwendet. Als Kommunikationsprotokoll wird sowohl Ethernet, das Internetprotokoll (IP) als auch ein Nutzerdatagrammprotokoll (UDP) genutzt. Bei drahtlosen Netzen, insbesondere drahtlosen Sensornetzwerken, werden Kommunikationssysteme nach IEEE 802.15.4, W-HART (Wireless-Highway Addressable Remote Transducer), Bluetooth oder ZigBee verwendet.

Dabei ist in manchen Einsatzumgebungen ein kryptographischer Schutz der Kommunikation erforderlich. Dazu wird ein kryptographischer Schlüssel verwendet. Um Performanceanforderungen, insbesondere für Echtzeit-Kommunikation, zu erfüllen, wird insbesondere bei einer Kommunikation in Substationen mittels IEC 61850 GOOSE (Generic Object Oriented Substation Event) zur Absicherung auf einen gruppenbasierten Ansatz verwendet.

In V. Roca, A. Francillon, S. Faurite: "Use of TESLA in the ALC and NORM Protocols, draft-ietf-msec-tesla-for-alc-norm-07.txt", Internet Engineering Task Force IETF; Standard Working Draft, Internet Society (ISOC) 4, Rue des Falaises, CH-1205 Geneva, Switzerland, Bd. Msec, Nr. 7, 18. Dezember 2008 wird eine Senderauthentisierung und Integritätsprüfung von Multicast-Nachrichtenpaketen offenbart, die auf ein als TESLA (Time Efficient Stream Loss-tolerant Authentication) bezeichnetes Authentisierungsprotokoll basieren. Dabei werden Sendeknotenschlüssel als eine Schlüsselkette erzeugt und zur Bildung einer Nachrichten-Prüfsumme verwendet, die mit der Multicast-Nachricht an die Empfänger gesendet wird. Erst nach einer vorbestimmten maximalen Verzögerungszeit gegenüber dem Sendezeitpunkt wird der Sendeknotenschlüssel dem Empfänger mitgeteilt. Optional kann der Sender das Datenpaket über einen dem Sender und allen Empfänger bekannten Gruppenschlüssel und das Bilden einer Prüfsumme eine Vorprüfung der Datenpakete durchführen. Wird bei einer solchen Vorprüfung ein verändertes Paket entdeckt, wird dieses sofort verworfen. Da die Verifizierung durch den Gruppenschlüssel lediglich eine optionale Vorprüfung ist, muss anschließend eine TESLA Authentisierungsprüfung über den Sendeknotenschlüssel erfolgen.

Dies hat den Nachteil, dass bei der Bearbeitung von Multicast-Nachrichten mit Echtzeitanforderung die Datenpakete erst mit einer Verzögerungszeit nach dem Empfang im Empfänger überprüft und ausgeführt werden. Eine Echtzeitanforderung kann somit nicht gewährleistet werden.

Beispielsweise beschreibt die WO 2012/034807 ein Verfahren zur Authentisierung von Multicast-Nachrichten auf einen gruppenbasierten Ansatz. Dabei wird ein Gruppenschlüssel zur Berechnung eines Integritäts-Überprüfungswertes, beispielsweise einem Nachrichtenauthentisierungscode (MAC, MIC) genutzt. Der Gruppenschlüssel wird dabei mit Hilfe eines Initialwertes und dem wiederholten Anwenden einer Einwegefunktion gebildet. Anschließend wird ein so generierter Gruppenschlüssel in umgekehrter Reihenfolge zur Authentisierung einer Reihe von Nachrichten verwendet. Erst nach Freigabe des jeweiligen Schlüssels kann die Integrität der vorher gesendeten Nachrichten letztendlich überprüft werden. Ein solches Verfahren ermöglicht den Manipulations-Schutz der Nachrichten, aber nicht die manipulationsgeschützte Identifikation eines sendenden Gerätes, das sich nicht konform verhält. Zudem erfüllt es nicht die Erfordernisse einer Echtzeit-Kommunikation.

Es ist somit die Aufgabe der vorliegenden Erfindung, bei einer mit einem Gruppenschlüssel geschützten Kommunikation eine manipulationsgeschützte Identifikation eines Senders zu ermöglichen.

Die Aufgabe wird durch die in den unabhängigen Ansprüchen beschriebenen Maßnahmen gelöst. In den Unteransprüchen sind vorteilhafte Weiterbildungen der Erfindung dargestellt.

In dem erfindungsgemäßen Verfahren zur geschützten Kommunikation mit Sender-Authentisierung werden innerhalb einer Gruppe von Sende- und Empfangsknoten Multicast-Nachrichten von einem Sendeknoten an eine Mehrzahl von Empfangsknoten gesendet und jedem Sende- und Empfangsknoten ist ein gleicher Gruppenschlüssel zugeordnet. Das Verfahren umfasst als ersten Verfahrensschritt ein Ermitteln einer kryptographischen Nachrichten-Prüfsumme unter Verwendung des Gruppenschlüssels und ein Ermitteln einer kryptographischen Sendeknoten-Prüfsumme unter Verwendung eines separaten Sendeknoten-Schlüssels im Sendeknoten. Als nächster Verfahrensschritt erfolgt das Senden einer Multicast-Nachricht mit der Nachrichten-Prüfsumme und der Sendeknoten-Prüfsumme an die Empfangsknoten der Gruppe. In jedem Empfangsknoten erfolgt eine Authentisierung der Multicast-Nachricht durch den Gruppenschlüssel direkt nach dem Empfang der Multicast-Nachricht. In jedem Empfangsknoten wird des Weiteren der separate Sendeknoten-Schlüssel empfangen und anschließend der Sendeknoten durch den separaten Sendeknoten-Schlüssel authentisiert, wobei die Multicast-Nachricht und der zugehörige Sendeknoten-Schlüssel zeitlich unabhängig voneinander empfangen werden.

Dies hat den Vorteil, dass auch bei gruppenbasierter Kommunikation der Sender einer Nachricht identifiziert und authentisiert werden kann. Dabei kann eine Sendeknotenauthentisierung erst nach dem Empfang des Sendeknoten-Schlüssels erfolgen und somit zeitlich verzögert zur Authentisierung der Multicast-Nachricht erfolgen. Damit können auch bestimmte von einem Sendeknoten initiierte Aktionen zurück abgewickelt werden, wenn der Sendeknoten durch die zeitlich verzögerte Sendeknotenauthentisierung als unsicher erkannt wird.

In einer Ausführungsform wird zur Berechnung der kryptographischen Nachrichten-Prüfsumme ein identischer Initialisierungswert wie zur Berechnung der Sendeknoten-Prüfsumme verwendet. Da in einem Initialisierungswert beispielsweise ein Zählerwert oder eine Nonce enthalten ist, muss lediglich ein Zählerwert bzw. eine Nonce, in einem Sender verwaltet und bereitgestellt werden.

In einer Ausführungsform wird der Sendeknoten-Schlüssel vom Sendeknoten an die Empfangsknoten übermittelt. Dies ermöglicht eine sehr flexible Verwendung des Sendeknoten-Schlüssels mit minimalem Signalisierungsverkehr. Beispielsweise kann der Sendeknoten abhängig von der zu sendenden Nachrichtenart den Sendeknoten-Schlüssel zu einem unterschiedlichen Zeitpunkt übermitteln.

In einem weiteren vorteilhaften Ausführungsbeispiel wird der Sendeknoten-Schlüssel von einer räumlich abgesetzten Schlüsselmanagement-Einrichtung an die Empfangsknoten übermittelt. Dies reduziert den Funktionsumfang eines Sendeknotens und erlaubt eine kostengünstige und wenig komplexe Ausführung eines Sendeknotens. Andererseits können durch eine räumlich abgesetzte, zentrale Schlüsselmanagement-Einrichtung die Sendeknoten-Schlüssel für eine Vielzahl von Sendeknoten koordiniert verwaltet werden.

In einer vorteilhaften Ausführungsform wird der Sendeknoten-Schlüssel den Empfangsknoten während eines Gültigkeitszeitraums des Sendeknoten-Schlüssels bereitgestellt. Dies erlaubt insbesondere bei besonders geschützten Empfangsknoten eine Sendeknotenauthentisierung zeitnah zum Empfang der Multicast-Nachricht durchzuführen. Beispielsweise wird der Sendeknoten-schlüssel gleichzeitig mit der Multicast-Nachricht beim Empfangsknoten bereitgestellt.

In einer vorteilhaften Ausführungsform wird der Sendeknoten-Schlüssel dem Empfangsknoten nach Ablauf eines Gültigkeitszeitraums des Sendeknoten-Schlüssels bereitgestellt. Dies erlaubt es eine wenig geschützte Übertragung des Sendeknoten-Schlüssels zu nutzen, da ein abgehörter Sendeknoten-Schlüssel nicht mehr zum Senden von manipulierten Nachrichten genutzt werden kann.

In einer vorteilhaften Ausführungsform der vorliegenden Erfindung wird eine Interim-Sendeknoten-Prüfsumme während eines Gültigkeitszeitraums des Sendeknotenschlüssels ohne Einbeziehung des Sendeknotenschlüssels aus der zu sendenden Multicast-Nachricht und einem Initialisierungswert, nachfolgend jeweils aus der zu sendenden Multicast-Nachricht und der vorher gesendeten Interim-Sendeknoten-Prüfsumme durch einen Hashfunktion gebildet. Erst für die letzte im Gültigkeitszeitraums gesendeten Multicast-Nachricht wird die Sendeknoten-Prüfsumme durch eine kryptographische Hashfunktion und dem Sendeknotenschlüssel aus der zu sendenden Multicast-Nachricht und der vorher gesendeten Sendeknoten-Prüfsumme gebildet, wobei jeweils nur die letzte empfangene Sendeknoten-Prüfsumme im Empfangsknoten (R1) gespeichert wird. Dies ermöglicht eine besonders Speicherplatz sparende Implementierung. Außerdem ist die erforderliche Übertragungsbandbreite reduziert.

In einer weiteren vorteilhaften Ausführungsform werden die Multicast-Nachrichten, die während eines Gültigkeitszeitraums eines Sendeknotenschlüssels übertragen werden, durch einen Hash-Baum in den Empfangsknoten gespeichert, wobei die Blätter des Hash-Baums die durch eine Hashfunktion berechneten Hashwerte der gesendeten Multicast-Nachrichten sind, wobei lediglich der letzte Hashwert durch eine kryptographische Hashfunktion gebildet wird. Dies ermöglicht eine besonders Speicherplatz sparende Implementierung. Außerdem ist die erforderliche Übertragungsbandbreite reduziert.

In einer vorteilhaften Ausführungsform wird der Zeitpunkt der Bereitstellung des Sendeknotenschlüssels abhängig von der Sicherheit der Empfangsknoten gewählt. Einem gut gesicherten Empfangsknotens, der beispielsweise physikalisch vor Zugriff geschützt ist, kann dabei bereits zu einem frühen Zeitpunkt der Sendeknoten-Schlüssel bereitgestellt werden.

In einer Ausführungsform wird der Sendeknoten-Schlüssel digital signiert übermittelt. Alternativ oder zusätzlich kann der Sendeknoten-Schlüssel über eine Punkt-zu-Punkt-Sicherheitsverbindung zwischen dem Sendeknoten und den Empfangsknoten oder zwischen der Schlüsselmanagement-Einrichtung und den Empfangsknoten übermittelt werden. Dies garantiert, dass der Sendeknoten-Schlüssel unverändert und nicht manipuliert bei den Empfangsknoten ankommt.

In einer vorteilhaften Ausführungsform wird der Sendeknoten-Schlüssel durch ein Element einer Hash-Kette gebildet. Dies ermöglicht es, die Gültigkeit eines Sendeknoten-Schlüssels aus einem vorher beispielsweise authentisiert empfangenen Sendeknoten-Schlüssel durch Anwendung einer Hash-Funktion auf diesen vorhergehenden Sendeknoten-Schlüssel zu ermitteln.

In einer vorteilhaften Ausführungsform überprüft der Empfangsknoten alle oder eine zufällige oder nach bestimmten inhaltlichen Kriterien ausgewählte, in dem Gültigkeitszeitraum des Sendeknoten-Schlüssels empfangende Nachrichten. Dies kann in Abhängigkeit vom Nachrichtentyp ausgewählt werden, wobei bei besonders kritischen Nachrichtentypen alle Nachrichten überprüft werden, bei weniger wichtigen Nachrichtentypen lediglich eine zufällige Auswahl an Nachrichten geprüft werden.

In einer Ausführungsform akzeptiert der Empfangsknoten Nachrichten abhängig von ihrem Nachrichtentyp erst nach einer Überprüfung der Sendeknoten-Prüfsumme. Dies ist insbesondere bei einem Nachrichtentyp angebracht, der im System grundlegende Einstellungen vornimmt.

In einem Ausführungsbeispiel der vorliegenden Erfindung informiert ein Empfangsknoten, der ein negatives Prüfergebnis ermittelt, weiteren Empfangsknoten von dem Prüfergebnis. Dies ermöglicht eine effiziente Auswertung der Prüfsumme durch wenige Empfangsknoten, wobei dennoch alle Empfangsknoten bei entsprechendem Hinweis auf eine Gefahr aufmerksam gemacht werden und zusätzliche Überprüfungen veranlasst werden können.

Das erfindungsgemäße System zur geschützten Gruppenkommunikation mit Sender-Authentisierung umfasst eine Gruppe von Sende- und Empfangsknoten, wobei jeder Sendeknoten eine Speichereinheit aufweist, die ausgebildet ist, um einen Gruppenschlüssel zu speichern. Jeder Sendeknoten weist des Weiteren eine Kryptoeinheit auf, die ausgebildet ist, um eine kryptographische Nachrichten-Prüfsumme unter Verwendung des Gruppenschlüssels und eine kryptographische Sendeknoten-Prüfsumme unter Verwendung eines separaten Sendeknotenschlüssels zu ermitteln. Jeder Sendeknoten weist zusätzlich eine Sendeeinheit auf, die ausgebildet ist, um eine Multicast-Nachricht mit der Nachrichten-Prüfsumme und der Sendeknoten-Prüfsumme an die Empfangsknoten der Gruppe zu senden. Jeder Empfangsknoten des Systems weist eine Speichereinheit auf, die ausgebildet ist um einen Gruppenschlüssel zu speichern, eine Empfangseinheit, die ausgebildet ist um die Multicast-Nachricht und den separaten Sendeknoten-Schlüssel zeitlich unabhängig voneinander zu empfangen und eine Authentisierungseinheit auf, die ausgebildet ist, um die Multicast-Nachricht direkt nach ihrem Empfang durch den Gruppenschlüssel zu authentisieren und den Sendeknoten durch den separaten Sendeknoten-Schlüssel zu authentisieren, wobei die Authentisierung der Multicast-Nachricht und die Authentisierung des Sendeknotens zeitlich unabhängig voneinander erfolgt.

Das System hat den Vorteil, dass auch bei Nachrichten mit Echtzeit Anforderung sowohl eine sehr schnelle Authentisierung der Multicast-Nachricht selbst als auch eine Authentisierung des Sendeknoten durch die zeitliche Entkopplung der Bekanntmachung des Gruppenschlüssels möglich ist.

In einer Ausführungsform umfasst das System eine räumlich abgesetzte Schlüsselmanagement-Einrichtung, die zum Senden eines Sendeknotenschlüssels an die Empfangsknoten ausgebildet ist.

Es wird des Weiteren ein Computerprogramm mit Programmbefehlen zur Durchführung des erfindungsgemäßen Verfahrens beansprucht, das in den Empfangs- und Sendeknoten sowie optional in der Schlüsselmanagement-Einrichtung ausgeführt wird. Es wird des Weiteren ein Datenträger beansprucht, der das Computerprogramm speichert.

Ausführungsbeispiele des erfindungsgemäßen Systems und des erfindungsgemäßen Verfahrens sind in den Zeichnungen beispielhaft dargestellt und werden anhand der nachfolgenden Beschreibung näher erläutert. Es zeigen:
- Fig. 1: ein Ausführungsbeispiel eines erfindungsgemäßen Systems aus Sende- und Empfangsknoten und einem Schlüsselmanagementknoten in schematischer Darstellung;
- Fig. 2: ein Ausführungsbeispiel eines erfindungsgemäßen Sende- bzw. Empfangsknotens in Blockdarstellung;
- Fig. 3: ein Ausführungsbeispiel einer erfindungsgemäßen Multicast-Nachricht in schematischer Darstellung;
- Fig. 4A: ein Ausführungsbeispiel zur Bildung einer Nachrichten-Prüfsumme in schematischer Darstellung;
- Fig. 4B: ein Ausführungsbeispiel zur Bildung einer Sendeknoten-Prüfsumme in schematischer Darstellung;
- Fig. 5: ein Ausführungsbeispiel der zeitlichen Verfügbarkeit eines Gruppen- bzw. Sendeknotenschlüssels am Sende- bzw. Empfangsknoten in schematischer Darstellung;
- Fig. 6: ein Ausführungsbeispiel zur Bildung der Sendeknoten-Prüfsumme während einem Gültigkeitszeitraum für einen Sendeknotenschlüssel in schematischer Darstellung; und
- Fig. 7: ein Ausführungsbeispiel eines Hash-Baums zur Speicherung von Multicast-Nachricht innerhalb eines Gültigkeitszeitraums eines Sendeknotenschlüssels in schematischer Darstellung.

Einander entsprechende Teile sind in allen Figuren mit den gleichen Bezugszeichen versehen.

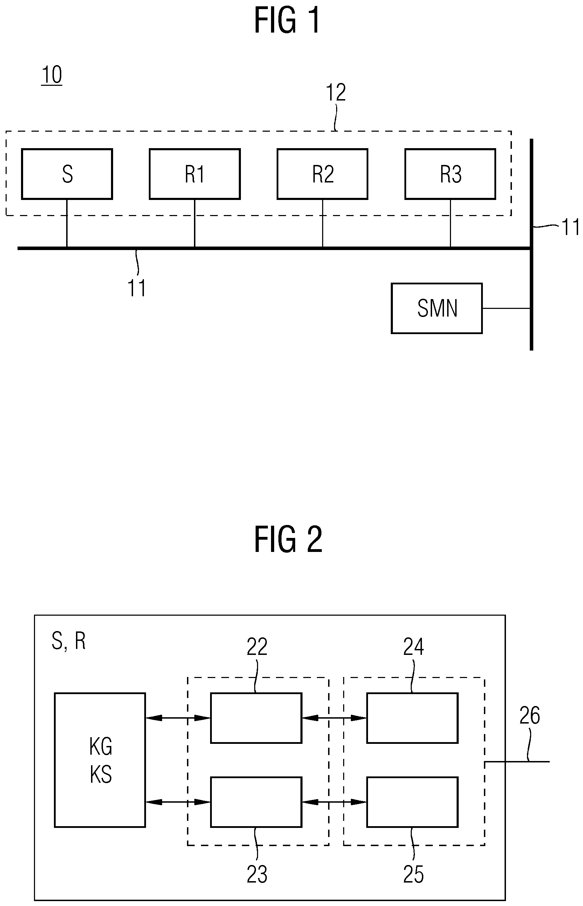

Fig. 1 zeigt ein System, beispielsweise ein Steuerungsnetzwerk für Energienetzautomatisierung, mit einem Sendeknoten S und mehreren Empfangsknoten R1, R2, R3. Diese sind über ein Datennetzwerk 11, beispielsweise Ethernet, verbunden. Die Sende- und Empfangsknoten S, R1, R2, R3, können auch durch ein drahtloses Datennetzwerk, beispielsweise nach IEEE 802.15.4, W-HART, Bluetooth oder ZigBee verbunden sein. Es ist zudem möglich, dass jeder Knoten sowohl in der Rolle eines Sendeknotens S, also auch in der eines Empfangsknotens R, agiert. Mit dem Datennetzwerk 11 ist auch eine Schlüsselmanagement-Einrichtung SMN verbunden, die als räumlich abgesetzter, separater Knoten ausgebildet ist und beispielsweise Nachrichtenschlüssel und insbesondere Sendeknotenschlüssel generiert und verwaltet und diese an die Sendeknoten S und Empfangsknoten R1, R2, R3 sendet. Die Schlüsselmanagement-Einrichtung SMN kann auch in einen ausgezeichneten Sende- bzw. Empfangsknoten S, R1, R2, R3 oder eine andere Funktionseinheit integriert sein.

Die dargestellten Sender S, R1, R2, R3 bilden eine Gruppe 12 von Sende- und Empfangsknoten, denen jeweils der gleiche Gruppenschlüssel KG zugeordnet ist. Daten werden innerhalb der Gruppe 12 durch Broadcast-, Multicast- oder Anycast-Nachrichten verteilt. Diese wird nachfolgend allgemein als Multicast-Nachricht bezeichnet, schließt jedoch auch eine Broadcast- oder Anycast-Nachricht mit ein. Bei einer solchen Nachricht besteht eine Kommunikationsbeziehung zwischen einem Sendeknoten S und einem oder mehreren Empfangsknoten R1, R2, R3. Die Empfangsknoten R1, R2, R3 sind dem Sendeknoten S teilweise nicht bekannt. Im Gegensatz zu einer Punkt-zu-Punkt-Kommunikation kann hierbei also keine Sicherheitsbeziehung zwischen dem Sendeknoten S und einem bestimmten Empfangsknoten R1, R2, R3 verwendet werden.

In Fig. 2 ist beispielhaft eine Ausführungsform eines integrierten Sende- bzw. Empfangsknotens S, R dargestellt. Der Sende- bzw. Empfangsknoten S, R umfasst eine Speichereinheit 21, in der ein Gruppenschlüssel KG sowie ein separater Sendeknoten-Schlüssel KS abgespeichert werden kann. Die Speichereinheit 21 ist mit einer Kryptoeinheit 22 verbunden. In der Kryptoeinheit 22 wird eine kryptographische Nachrichten-Prüfsumme ermittelt. Zusätzlich wird eine kryptographische Sendeknoten-Prüfsumme unter Verwendung des separaten Sendeknoten-Schlüssels KS von der Kryptoeinheit 22 berechnet und zusammen mit den zu übermittelnden Daten in ein Datenpaket verpackt und durch die Sendeeinheit 24 über die Datenverbindung 26 versendet.

In einem Empfangsknoten R, hier ebenfalls in Fig. 2 als integrierte Einheit mit einem Sendeknoten S dargestellt, empfängt das Datenpaket in einer Empfangseinheit 25. Die Empfangseinheit 25 entpackt das Datenpaket und gibt die enthaltene Nachrichten-Prüfsumme an eine Authentisierungseinheit 23, die mit der Empfangseinheit 25 verbunden ist, weiter. Dort wird die Multicast-Nachricht direkt nach dem Empfang durch den Gruppenschlüssel KG, der in der Speichereinheit 21 gespeichert ist, authentisiert. Der Sendeknoten-Schlüssel KS, zur Authentisierung des Sendeknotens S, kann einem Empfangsknoten R während des Gültigkeitszeitraums des Sendeknoten-Schlüssels oder nach Ablauf des Gültigkeitszeitraums bereitgestellt werden. Das heißt, dass beispielsweise die SendeknotenAuthentisierung zu einem späteren Zeitpunkt als die Authentisierung der Multicast-Nachricht stattfindet und diese je nach dem Zeitpunkt der Verfügbarkeit des Sendeknoten-Schlüssels KS unterschiedlich zeitlich beabstandet erfolgt.

Liegt beim Empfang einer Nachricht der Sendeknoten-Schlüssel KS, mit der die Sendeknoten-Prüfsumme erstellt wurde, dem Empfangsknoten R noch nicht vor, wird beispielsweise die Sendeknoten-Prüfsumme in der Speichereinheit 21 gespeichert und nach dem Empfang des entsprechenden Sendeknoten-Schlüssels wieder abgerufen und in der Authentisierungseinheit 23 zur Authentisierung des Sendeknotens S verwendet.

Der Sendeknoten-Schlüssel KS wird vorteilhafterweise geschützt übertragen, beispielsweise digital signiert mit einem gerätespezifischen Schlüssel des Sendeknotens S oder einem gerätespezifischen Schlüssel der Schlüsselmanagement-Einrichtung SMN. Der Sendeknoten-Schlüssel KS kann aber auch geschützt über eine Punkt-zu-Punkt-Sicherheitsbeziehung zwischen einem Sendeknoten S und den Empfangsknoten R1, R2, R3 oder aber zwischen der Sicherheitsmanagementeinrichtung SMN und den Empfangsknoten R1, R2, R3 übertragen werden.

Eine weitere Möglichkeit zur geschützten Übertragung des Sendeknoten-Schlüssels KS ist es, dem Sendeknoten-Schlüssel als ein Element einer Hash-Kette zu bilden. Dabei wird aus einem zufällig gewählten Anfangswert KSⁿ eines Sendeknoten-Schlüssels ein neuer Sendeknoten-Schlüssel KSⁿ⁻¹ durch iterative Anwendung einer Hash-Funktion auf den Anfangswert KSⁿ beziehungsweise den letzten gebildeten Sendeknoten-Schlüssel, eine Kette von Sendeknoten-Schlüssel KSⁿ,..,KS⁰ erzeugt. Die so erzeugten Sendeknoten-Schlüssel KSⁿ,..,KS⁰ werden in umgekehrter Reihenfolge ihrer Erzeugung verwendet. Sobald dem Empfangsknoten R1, R2, R3 ein neuer Sendeknoten-Schlüssel KSⁱ mitgeteilt wird, kann dieser durch den vorher gesendeten Sendeknoten-Schlüssel KSⁱ⁻¹ verifiziert werden, indem der Sendeknoten S die Hash-Funktion auf den zuletzt gelieferten Sendeknoten-Schlüssel KSⁱ anwendet. Stimmt das Ergebnis mit dem vorher gesandten Sendeknoten-Schlüssel KSⁱ⁻¹ überein, so ist der neue gesendete Sendeknoten-Schlüssel KSⁱ ein Element der Sendeknoten-Schlüsselkette und somit als gültig authentisiert.

Eine endgültige Überprüfung des Sendeknoten-Schlüssels kann letztendlich erst nach dem Empfang des Anfangswerts KSⁿ des Sendeknoten-Schlüssels, der als Basis für die Hash-Kette verwendet wurde, festgestellt werden. Teil der Nachricht muss dabei ein Zeitstempel sein, um im Nachgang eine Überprüfung zu ermöglichen. Alternativ muss sichergestellt sein, dass zwischen Sendeknoten S und Empfangsknoten R1, R2, R3 eine Zeitsynchronisation kleiner einem vorgegebenen Wert eingehalten wird.

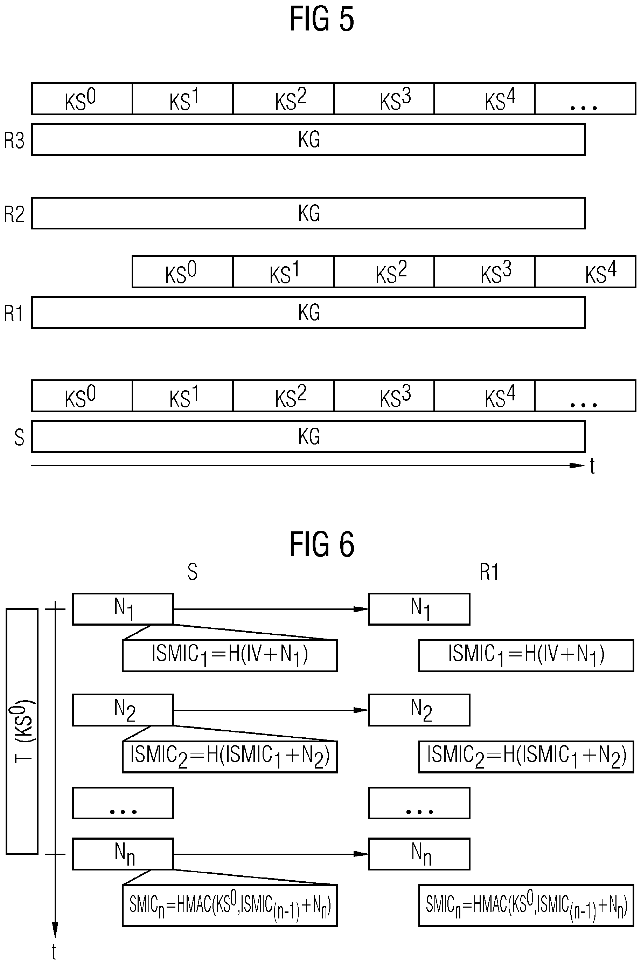

In einer Ausführungsform informiert ein Empfangsknoten R, der eine Überprüfung durchführt, im Beispiel der Fig. 5 sind das die Empfangsknoten R1 und R3, andere Knoten über ein negatives Prüfergebnis. Beispielsweise sendet ein solcher Empfangsknoten R1 oder R3 eine Alarmnachricht, um auf eine mögliche Manipulation hinzuweisen. Die Empfangsknoten können darauf geeignet reagieren und beispielsweise einen eigensicheren Betriebszustand einnehmen, oder auch lediglich die Alarmnachricht aufzeichnen und für eine spätere Überprüfung sicherstellen.

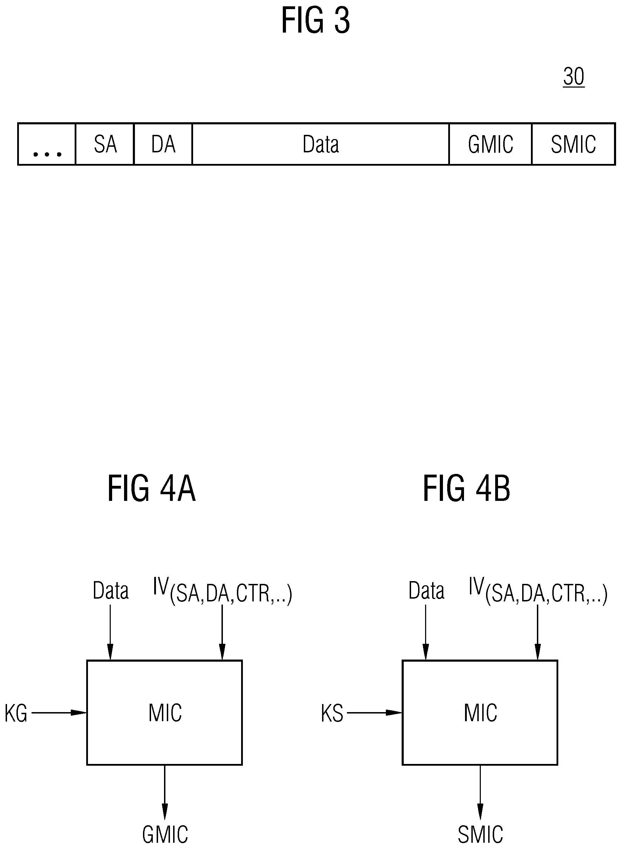

Fig. 3 zeigt ein Datenpaket 30 das die Multicast-Nachricht überträgt. Es kann sich dabei um einen Ethernet-Frame oder ein Internetprotokoll(IP)-Paket handeln. Es weist einen Header mit einer Sendeadresse SA und einer Zieladresse DA auf sowie die Multicast-Nachricht Data. Das Datenpaket 30 weist zusätzlich zwei kryptographische Prüfsummen, beispielsweise einen Message Integrity Code auf, die als Nachrichten-Prüfsumme GMIC und Sendeknoten-Prüfsumme SMIC bezeichnet sind.

Zur Berechnung der GMIC wird ein symmetrischer Gruppenschlüssel KG verwendet, siehe Fig. 4A. In ähnlicher Weise wird zur Berechnung der Sendeknoten-Prüfsumme SMIC ein symmetrischer Sendeknotenschlüssel KS verwendet, siehe Fig. 4B. Zur Berechnung der Nachrichten-Prüfsumme GMIC und beispielsweise ebenfalls des Sendeknoten-Prüfsumme SMIC wird als Algorithmus beispielsweise ein Advanced Encryption Standard mit Integritätssicherung durch Cipher Block Chaining von Message Authentication Code (AES-CBC-MAC) und Message Authentication Code berechnet mit einem sicheren Hash-Algorithmus, beispielsweise HMAC-SHA1 oder HMAC-SHA256 verwendet. Alternativ kann der Schlüssel in einem Verfahren mit Authenticated Encryption, wie z.B. AES GCM oder auch AES-CCM, verwendet werden. Dieser Ansatz hat den Vorteil, dass zusätzlich zur Authentizität der Nachricht auch deren Vertraulichkeit geschützt werden kann. Zur Berechnung einer Nachrichten-Prüfsumme GMIC bzw. Sendeknoten-Prüfsumme SMIC wird der Initialisierungsvektor IV benötigt, der üblicherweise einen Zähler CTR umfasst. Daneben können Adressen aus dem Datenpaket, wie beispielsweise die Sende- und/oder Zieladresse SA, DA oder auch die in den Initialisierungsvektor IV eingehen. Des Weiteren geht zur Berechnung der Prüfsumme die eigentliche Multicast-Nachricht beziehungsweise der Nutzinhalt Data in die Berechnung der Prüfsummen mit ein.

Es können zur Bestimmung der Nachrichten-Prüfsumme GMIC und der Sendeknoten-Prüfsumme SMIC unterschiedliche Initialisierungsvektoren IV verwendet werden. Vorteilhaft ist es jedoch, wenn zur Bestimmung der Nachrichten- und Sendeknoten-Prüfsumme GMIC, SMIC der gleiche oder ein zuordenbarer Initialisierungsvektorwert verwendet wird. Es muss dann lediglich ein Zähler verwaltet werden.

Fig. 5 zeigt nun, wann der Sendeknoten S welchen Schlüssel verwendet. In Fig. 5 sind übereinander, unten beginnend der Sendeknoten S und die Empfangsknoten R1, R2, R3 eingetragen und die verfügbaren Gruppenschlüssel KG bzw. Sendeknoten-Schlüssel KS in den jeweiligen Knoten in Verlauf der Zeit nach rechts hin dargestellt.

Der Sendeknoten S verwendet den Gruppenschlüssel KG zur Bestimmung der Nachrichten-Prüfsumme GMIC. Der Gruppenschlüssel KG liegt zur gleichen Zeit auch den Empfangsknoten R1, R2, R3 vor, sodass sie für eine empfangene Multicast-Nachricht unmittelbar die Nachrichten-Prüfsumme GMIC verifizieren können.

Als Sendeknoten-Schlüssel KS verwendet der Sendeknoten S mehrere Schlüssel KS⁰, KS¹, KS², KS³, KS⁴, usw. Diese werden jeweils in einem bestimmten Zeitabschnitt verwendet, um die Sendeknoten-Prüfsumme SMIC zu ermitteln. Diese Schlüssel KS⁰, KS¹, KS², ..., liegen den Empfangsknoten R1, R2, R3 nun zu unterschiedlicher Zeit t vor.

Der Empfangsknoten R1 erhält die Schlüssel KS⁰, KS¹, KS², ... des Sendeknotens S erst zeitlich verzögert. Wenn der Empfangsknoten R1 einen dieser Schlüssel erhält, so ist er bereits nicht mehr zum Senden gültig. Der Empfangsknoten R1 kann dadurch aber nachträglich mit einem bestimmten Zeitverzug überprüfen, ob eine gesendete Nachricht, die vorgibt vom Sendeknoten S gesendet worden zu sein, auch tatsächlich vom Sendeknoten S gesendet wurde. Der Empfangsknoten R1 kann diese nachträglichen Überprüfungen für alle Multicast-Nachrichten, für einige zufällige, oder nach bestimmten inhaltlichen Kriterien, beispielsweise vom Nachrichtentyp, vornehmen. Er kann auch manche Nachrichten erst zeitlich verzögert akzeptieren, wenn er die Sendeknoten-Prüfsumme überprüft hat.

Der Empfangsknoten R2 verfügt nur über den Gruppenschlüssel KG. Er überprüft daher die Sendeknoten-Prüfsumme SMIC nicht.

Der Empfangsknoten R3 verfügt zeitgleich wie der Sendeknoten S über den Sendeknoten-Schlüssel KS⁰, KS¹, KS², KS³, KS⁴ des Sendeknotens S. Daher könnte dieser Empfangsknoten R3, wenn er manipuliert wäre, sich für den Empfangsknoten S ausgeben. Eine solche Schlüsselverteilung ist aber sinnvoll, wenn beispielsweise der Empfangsknoten R3 ein besonders geschützter Knoten ist.

Die Anwendung des Sendeknoten-Schlüssels KS kann ebenfalls variieren. In einer ersten Variante wird jede Multicast-Nachricht separat mit dem Sendeknoten-Schlüssel KS geschützt. Dies ist insbesondere für den Empfangsknoten R3 sinnvoll, bei dem die Sendeknoten-Schlüssel KS⁰, KS¹, KS², KS³, KS⁴ zur gleichen Zeit wie beim Sendeknoten S verfügbar sind. Wird der Sendeknoten-Schlüssel KS⁰, KS¹, KS², KS³, KS⁴ jedoch erst nach einem bestimmten Zeitintervall freigegeben, siehe Empfangsknoten R1, so muss jeder entsprechende Empfangsknoten R1 die Nachricht speichern, um sie im Nachgang bei Erhalt des Sendeknoten-Schlüssels prüfen zu können.

In einer optimierten Variante werden daher von den Nachrichten in einem Gültigkeitsintervall T des Sendeknoten-Schlüssels KS⁰, KS¹, KS², ... Hash-Werte zyklisch ohne eine Beziehung des Sendeknoten-Schlüssels KS berechnet. Nur für die letzte Multicast-Nachricht des Sendeknotens S, das er innerhalb des Gültigkeitsintervalls T des verwendeten Sendeknoten-Schlüssels KS, bspw. KS⁰, aussendet, geht dann der Sendeknoten-Schlüssel KS⁰ mit ein. Diese Variante erlaubt, dass der Empfangsknoten R immer nur den letzten Hash-Wert speichern muss. Nachteil ist allerdings, dass die einzelnen Multicast-Nachrichten, für die ein falscher Hash-Wert erzeugt wurde, nicht mehr identifiziert werden kann. Es kann nur festgestellt werden, dass eine oder mehrere Multicast-Nachrichten im Gültigkeitsintervall T des Sendeknoten-Schlüssels KS falsch waren.

Fig. 6 zeigt den zeitlichen Ablauf der vom Sendeknoten S verschickten Multicast-Nachrichten N₁, N₂, ...,Nₙ von oben nach unten, wie auch der Pfeil t verdeutlicht. Auf der rechten Seite sind die Abläufe in dem Empfangsknoten R1 dargestellt. Der zeitliche Verlauf erstreckt sich über einen Gültigkeitszeitraum eines Sendeknoten-Schlüssels, beispielsweise KS⁰. Der Sender S erzeugt zu Beginn eines Gültigkeitszeitraums T(KS⁰) einen Initialisierungsvektor IV, beispielsweise nach den in Fig. 4A bzw. Fig. 4B dargestellten Regeln, konkateniert ihn mit der Multicast-Nachricht N₁ und berechnet aus beiden eine Interims-Sendeknoten-Prüfsumme ISMIC₁. Hierbei geht nicht der senderspezifische Sendeknoten-Schlüssel KS⁰ ein. Die Interims-Sendeknoten-Prüfsumme ISMIC₁ wird, anstatt der SMIC in einem Datenpaket 30, siehe Fig. 3, angehängt und an den Empfangsknoten R1 verschickt. Der Empfangsknoten R1 kann nun ebenfalls den Initialisierungsvektor bestimmen und die Interims-Sendeknoten-Prüfsumme ISMIC₁ berechnen und speichern. Für jede weitere Multicast-Nachricht N₂, ..,Nₙ₋₁ wird ebenfalls eine Interims-Sendeknoten-Prüfsumme ISMIC₂,..,ISMICₙ₋₁ berechnet, der dann die Interims-Sendeknoten-Prüfsumme ISMIC₁,..,ISMICₙ₋₂ der vorhergehenden Nachricht mit eingeht.

Die finale Sendeknoten-Prüfsumme SMICn wird mittels einer kryptographischen Hash-Funktion, beispielsweise einem HMAC-Verfahren, aus der Nachricht Nn und der ISMICn-1 berechnet in die zusätzlich der Sendeknoten-Schlüssel KS0 mit eingeht. Diese finale Sendeknoten-Prüfsumme SMICn sichert nun die im Gültigkeitszeitraum T(KS0) versendeten Nachrichten N1, N2, ..., Nn.

Durch diesen Ablauf muss im Empfangsknoten R1 jeweils nur die letzte Interims-Sendeknoten-Prüfsumme ISMIC abgespeichert werden, sodass auch Empfangsknoten R1 mit geringer Speicherkapazität eine ganze Kette von Nachrichten authentisieren können. Das beschriebene Verfahren funktioniert jedoch nur, wenn sichergestellt ist, dass die Nachrichten N1, ..., Nn der gleichen Reihenfolge im Empfangsknoten ankommen, wie sie vom Sendeknoten gesendet wurden und keine Nachricht fehlt.

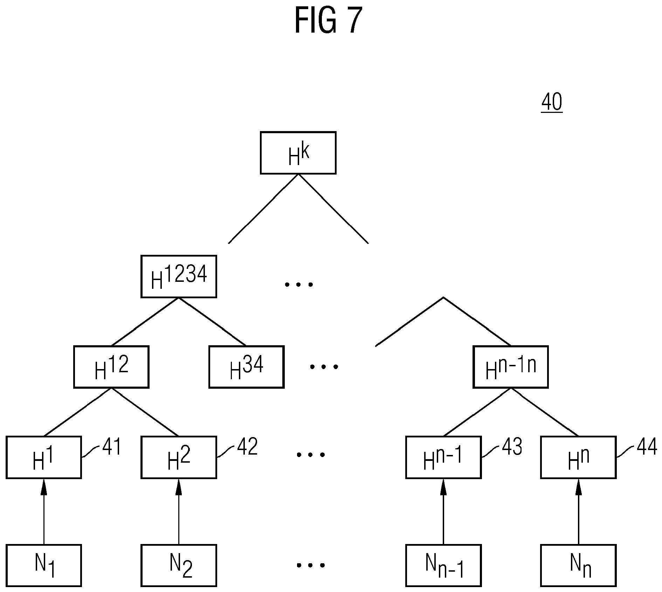

In einer Variante wird statt der Verkettung der Hash-Werte der einzelnen Nachrichten N1, ... , Nn eines Gültigkeitsintervalls T im Empfangsknoten R1 ein Hash-Baum erzeugt, siehe Fig. 7. Die Blätter H0, H1, ..., Hn sind die Hash-Werte der gesendeten Datenpakete N1, N2, N3, N4, ... Nn. Diese Hash-Werte werden dann geschützt bereitgestellt, indem über die Hash-Werte H0, H1, ... Hn der einzelnen gesendeten Pakete ein Hash-Wert H00, ..., Hn-1n berechnet wird. der dann durch eine kryptographische Prüfsumme, hier beispielsweise berechnet durch einen HMAC-Algorithmus, ge-schützt wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt. So kann das Verfahren auch in eine Gruppe von Sende- bzw. Empfangsknoten in einer Energienetzautomatisierungsumgebung oder auch in einem Automobil-Netzwerk ablaufen.

## Patentansprüche

1. Verfahren zur geschützten Gruppen-Kommunikation mit Sender-Authentisierung bei dem innerhalb einer Gruppe (12) von Sende- und Empfangsknoten (S, R1, R2, R3) Multicast-Nachrichten (30) von einem Sendeknoten (S) an eine Mehrzahl von Empfangsknoten (R1, R2, R3) gesendet werden und jedem Sende- und Empfangsknoten (S, R1, R2, R3) ein gleicher Gruppenschlüssel (KG) zugeordnet ist, mit den Verfahrensschritten:
- Ermitteln einer kryptographischen Nachrichten-Prüfsumme (GMIC) unter Verwendung des Gruppenschlüssels (KG) und Ermitteln einer kryptographischen Sendeknoten-Prüfsumme (SMIC) unter Verwendung eines separaten Sendeknoten-Schlüssels (KS) im Sendeknoten (S),
- Senden einer Multicast-Nachricht (30) mit der Nachrichten-Prüfsumme (GMIC) und der Sendeknoten-Prüfsumme (SMIC) an die Empfangsknoten (R1, R2, R3) der Gruppe (12),
- Authentisierung der Multicast-Nachricht (30) durch den Gruppenschlüssel (KG) direkt nach dem Empfang der Multicast-Nachricht (30) in jedem Empfangsknoten (R1, R2, R3),
- Empfangen des separaten Sendeknoten-Schlüssels (KS) in den Empfangsknoten (R1, R2, R3) und anschließende Authentisierung des Sendeknotens (S) durch den separaten Sendeknoten-Schlüssel (KS) in jedem Empfangsknoten (R1, R2, R3),
wobei die Multicast-Nachricht (30) und der zugehörige Sendeknoten-Schlüssel (KS) zeitlich unabhängig voneinander empfangen werden, und bestimmte von dem Sendeknoten (S) initiierte Aktionen zurück abgewickelt werden, wenn der Sendeknoten (S) durch die zeitlich verzögerte Sendeknotenauthentisierung als unsicher erkannt wird.

2. Verfahren nach Anspruch 1, wobei zur Berechnung der kryptographischen Nachrichten-Prüfsumme (GMIC) ein identischer Initialisierungswert (IV) wie zur Berechnung der Sendeknoten-Prüfsumme (SMIC) verwendet werden.

3. Verfahren nach Anspruch 1 oder 2, wobei der Sendeknoten-Schlüssel (KS) vom Sendeknoten (S) an die Empfangsknoten (R1, R2, R3) übermittelt wird.

4. Verfahren nach Anspruch 1 oder 2, wobei der Sendeknoten-Schlüssel (KS) von einer räumlich abgesetzten Schlüsselmanagement-Einrichtung (SMN) an die Empfangsknoten (R1, R2, R3) übermittelt wird.

5. Verfahren nach einem der Ansprüche 1 bis 4, wobei der Sendeknoten-Schlüssel (KS) den Empfangsknoten (R1, R2, R3) während eines Gültigkeitszeitraums (T) des Sendeknoten-Schlüssels (KS) bereitgestellt wird.

6. Verfahren nach einem der Ansprüche 1 bis 4, wobei der Sendeknoten-Schlüssel (KS) den Empfangsknoten (R1, R2, R3) nach Ablauf eines Gültigkeitszeitraums (T) des Sendeknoten-Schlüssels (KS) bereitgestellt wird.

7. Verfahren nach Anspruch 6, wobei eine Interim-Sendeknoten-Prüfsumme (ISMICi) während eines Gültigkeitszeitraums (T) des Sendeknoten-Schlüssels (KS) ohne Einbeziehung des Sendeknoten-Schlüssels (KS) aus der zu sendenden Multicast-Nachricht (30) und einem Initialisierungswert (IV), nachfolgend jeweils aus der zu sendenden Multicast-Nachricht (30) und der vorher gesendeten Interim-Sendeknoten-Prüfsumme (ISMICi-1) durch einen Hashfunktion (H) gebildet wird und erst für die letzte im Gültigkeitszeitraums (T) gesendeten Multicast-Nachricht (30) die Sendeknoten-Prüfsumme (SMIC) durch eine kryptographische Hashfunktion (HMAC) und dem Sendeknoten-Schlüssel (KS) aus der zu sendenden Multicast-Nachricht (30) und der vorher gesendeten Sendeknoten-Prüfsumme (ISMICi-1) gebildet wird, wobei jeweils nur die letzte empfangene Sendeknoten-Prüfsumme im Empfangsknoten (R1) gespeichert wird.

8. Verfahren nach Anspruch 6, wobei die Multicast-Nachrichten (30), die während eines Gültigkeitszeitraums (T) eines Sendeknoten-Schlüssels (KS) übertragen werden, durch einen Hash-Baum (40) in den Empfangsknoten (R1) gespeichert werden, wobei die Blätter (201, 202, 203, 204) des Hashbaums (40) die durch eine Hashfunktion berechneten Hashwerte (H1, H2,..,Hn-1, Hn) der gesendeten Multicast-Nachrichten (N1, N2,..,Nn) sind, , wobei lediglich der letzte Hashwert (Hm) durch eine kryptographische Hashfunktion gebildet wird.

9. Verfahren nach einem der Ansprüche 5 bis 8, wobei der Zeitpunkt der Bereitstellung des Sendeknoten-Schlüssels (KS) abhängig von der Sicherheit der Empfangsknoten (R1, R2, R3) gewählt wird.

10. Verfahren nach einem der Ansprüche 3 bis 9, wobei der Sendeknoten-Schlüssel (KS) digital signiert übermittelt wird.

11. Verfahren nach einem der Ansprüche 3 bis 10, wobei der Sendeknoten-Schlüssel (KS) über eine Punkt-zu-Punkt Sicherheitsverbindung zwischen dem Sendeknoten (S) und den Empfangsknoten (R1, R2, R3) oder zwischen der Schlüsselmanagement-Einrichtung (SMN) und den Empfangsknoten (R1, R2, R3) übermittelt wird.

12. Verfahren nach einem der Ansprüche 1 bis 11, wobei der Sendeknoten-Schlüssel (KS) durch ein Element einer Hash-Kette gebildet wird.

13. Verfahren nach einem der Ansprüche 7 bis 12, wobei der Empfangsknoten (R1, R2, R3) alle oder einige zufällige oder nach bestimmten inhaltlichen Kriterien ausgewählte in dem Gültigkeitszeitraum (T) eines Sendeknoten-Schlüssels (KS) empfangene Nachrichten (N1, N2,..,Nn) überprüft.

14. Verfahren nach einem der Ansprüche 7 bis 12, wobei der Empfangsknoten (R1, R2, R3) Nachrichten (N1, N2,..,Nn) abhängig von ihrem Nachrichtentyp erst nach einer Überprüfung der Sendeknoten-Prüfsumme (SMIC) akzeptiert.

15. Verfahren nach einem der Ansprüche 1 bis 14, wobei ein Empfangsknoten (R1, R3), der ein negatives Prüfergebnis ermittelt, weitere Empfangsknoten (R1, R2, R3) von dem Prüfergebnis informiert.

16. System zur geschützten Gruppen-Kommunikation mit Sender-Authentisierung umfassend eine Gruppe (12) von Sende- und Empfangsknoten (S, R1, R2, R3), wobei
jeder Sendeknoten (S) aufweist:
- eine Speichereinheit (21), die ausgebildet ist um einen Gruppenschlüssel (KG) zu speichern,
- eine Kryptoeinheit (22), die ausgebildet ist um eine kryptographische Nachrichten-Prüfsumme (GMIC) unter Verwendung des Gruppenschlüssels (KG) und eine kryptographischen Sendeknoten-Prüfsumme (SMIC) unter Verwendung eines separaten Sendeknoten-Schlüssels (KS) zu ermitteln, und
- eine Sendeeinheit (23), die ausgebildet ist um eine Multicast-Nachricht mit der Nachrichten-Prüfsumme (GMIC) und der Sendeknoten-Prüfsumme (SMIC) an die Empfangsknoten (R1, R2, R3) der Gruppe (12) zu senden;
jeder Empfangsknoten (R1, R2, R3) aufweist:
- eine Speichereinheit (21), die ausgebildet ist um ein Gruppenschlüssel (KG) zu speichern,
- eine Empfangseinheit (25), die ausgebildet ist um die Multicast-Nachricht und den separaten Sendeknoten-Schlüssel (KS) zu empfangen, und
- eine Authentisierungseinheit (23), die ausgebildet ist um die Multicast-Nachricht direkt nach ihrem Empfang durch den Gruppenschlüssel (KG) zu authentisieren und den Sendeknoten (S) durch den separaten Sendeknoten-Schlüssel (KS) zu authentisieren,
wobei die Authentisierung der Multicast-Nachricht und die Authentisierung des Sendeknotens (S) zeitlich unabhängig voneinander erfolgt, und bestimmte von dem Sendeknoten (S) initiierte Aktionen zurück abgewickelt werden, wenn der Sendeknoten (S) durch die zeitlich verzögerte Sendeknotenauthentisierung als unsicher erkannt wird.

17. System nach Anspruch 16, umfassend einer räumlich abgesetzten Schlüsselmanagement-Einrichtung (SMN), die zum Senden eines Sendeknoten-Schlüssels (KS) an die Empfangsknoten (R1, R2, R3) und/oder Sendeknoten (S) ausgebildet ist.

18. Computerprogramm mit Programmbefehlen zur Durchführung des Verfahrens nach Ansprüchen 1-15.

19. Datenträger, der das Computerprogramm nach Anspruch 18 speichert.

## Claims

1. Method for protected group communication with transmitter authentication, in which multicast messages (30) are sent within a group (12) of transmitting and receiving nodes (S, R1, R2, R3) from a transmitting node (S) to a plurality of receiving nodes (R1, R2, R3) and each transmitting and receiving node (S, R1, R2, R3) has an assigned identical group key (KG), having the method steps of:
- ascertaining a cryptographic message checksum (GMIC) by using the group key (KG) and ascertaining a cryptographic transmitting node checksum (SMIC) by using a separate transmitting node key (KS) in the transmitting node (S),
- sending a multicast message (30) containing the message checksum (GMIC) and the transmitting node checksum (SMIC) to the receiving node (R1, R2, R3) of the group (12),
- authenticating the multicast message (30) by means of the group key (KG) directly after reception of the multicast message (30) in each receiving node (R1, R2, R3),
- receiving the separate transmitting node key (KS) in the receiving nodes (R1, R2, R3) and subsequently authenticating the transmitting node (S) by means of the separate transmitting node key (KS) in each receiving node (R1, R2, R3),
wherein the multicast message (30) and the associated transmitting node key (KS) are received at mutually independent times, and specific actions initiated by the transmitting node (S) are undone if the transmitting node (S) is identified as insecure by the delayed transmitting node authentication.

2. Method according to Claim 1, wherein the cryptographic message checksum (GMIC) is calculated by using an identical initialization value (IV) to that for calculating the transmitting node checksum (SMIC).

3. Method according to Claim 1 or 2, wherein the transmitting node key (KS) is conveyed from the transmitting node (S) to the receiving node (R1, R2, R3).

4. Method according to Claim 1 or 2, wherein the transmitting node key (KS) is conveyed from a physically remote key management device (SMN) to the receiving nodes (R1, R2, R3).

5. Method according to one of Claims 1 to 4, wherein the transmitting node key (KS) is provided to the receiving nodes (R1, R2, R3) during a validity period (T) of the transmitting node key (KS).

6. Method according to one of Claims 1 to 4, wherein the transmitting node key (KS) is provided to the receiving nodes (R1, R2, R3) after expiry of a validity period (T) of the transmitting node key (KS).

7. Method according to Claim 6, wherein an interim transmitting node checksum (ISMICi) is formed by a hash function (H) from the multicast message (30) to be sent and an initialization value (IV), subsequently in each case from the multicast message (30) to be sent and the previously sent interim transmitting node checksum (ISMICi-1), during a validity period (T) of the transmitting node key (KS) without incorporating the transmitting node key (KS), and the transmitting node checksum (SMIC) is formed by a cryptographic hash function (HMAC) and the transmitting node key (KS) from the multicast message (30) to be sent and the previously sent transmitting node checksum (ISMICi-1) only for the last multicast message (30) sent in the validity period (T), with in each case only the last received transmitting node checksum being stored in the receiving node (R1).

8. Method according to Claim 6, wherein the multicast messages (30) transmitted during a validity period (T) of a transmitting node key (KS) are stored by a hash tree (40) in the receiving nodes (R1), wherein the leaves (201, 202, 203, 204) of the hash tree (40) are the hash values (H1, H2,..,Hn-1, Hn) of the sent multicast messages (N1, N2,..,Nn) that are calculated by a hash function, with just the last hash value (Hm) being formed by a cryptographic hash function.

9. Method according to one of Claims 5 to 8, wherein the time of provision of the transmitting node key (KS) is chosen on the basis of the security of the receiving nodes (R1, R2, R3).

10. Method according to one of Claims 3 to 9, wherein the transmitting node key (KS) is conveyed in digitally signed fashion.

11. Method according to one of Claims 3 to 10, wherein the transmitting node key (KS) is conveyed via a point-to-point security connection between the transmitting node (S) and the receiving nodes (R1, R2, R3) or between the key management device (SMN) and the receiving nodes (R1, R2, R3).

12. Method according to one of Claims 1 to 11, wherein the transmitting node key (KS) is formed by an element of a hash chain.

13. Method according to one of Claims 7 to 12, wherein the receiving node (R1, R2, R3) checks all or some messages (N1, N2,..,Nn) received in the validity period (T) of a transmitting node key (KS), said messages being random or selected according to specific content criteria.

14. Method according to one of Claims 7 to 12, wherein the receiving node (R1, R2, R3) accepts messages (N1, N2,..Nn) on the basis of their message type only after a transmitting node checksum (SMIC) check.

15. Method according to one of Claims 1 to 14, wherein a receiving node (R1, R3) that ascertains a negative check result informs other receiving nodes (R1, R2, R3) of the check result.

16. System for protected group communication with transmitter authentication comprising a group (12) of transmitting and receiving nodes (S, R1, R2, R3), wherein
each transmitting node (S) has:
- a memory unit (21) designed to store a group key (KG),
- a crypto unit (22) designed to ascertain a cryptographic message checksum (GMIC) by using the group key (KG) and to ascertain a cryptographic transmitting node checksum (SMIC) by using a separate transmitting node key (KS), and
- a transmitting unit (23) designed to send a multicast message containing the message checksum (GMIC) and the transmitting node checksum (SMIC) to the receiving nodes (R1, R2, R3) of the group (12);
each receiving node (R1, R2, R3) has:
- a memory unit (21) designed to store a group key (KG),
- a receiving unit (25) designed to receive the multicast message and the separate transmitting node key (KS), and
- an authentication unit (23) designed to authenticate the multicast message directly after its reception by means of the group key (KG) and to authenticate the transmitting node (S) by means of the separate transmitting node key (KS),
wherein the authentication of the multicast message and the authentication of the transmitting node (S) take place at mutually independent times, and specific actions initiated by the transmitting node (S) are undone if the transmitting node (S) is identified as insecure by the delayed transmitting node authentication.

17. System according to Claim 16, comprising a physically remote key management device (SMN) designed to send a transmitting node key (KS) to the receiving nodes (R1, R2, R3) and/or transmitting nodes (S).

18. Computer program having program instructions for performing the method according to Claims 1-15.

19. Data storage medium storing the computer program according to Claim 18.

## Revendications

1. Procédé de communication de groupe protégée avec authentification de l'émetteur, dans lequel au sein d'un groupe (12) de nœuds d'émission et de réception (S, R1, R2, R3), des messages multidestinataires (30) sont transmis d'un nœud d'émission (S) à une pluralité de nœuds de réception (R1, R2, R3) et une clé de groupe (KG) identique est attribuée à chaque nœud d'émission et de réception (S, R1, R2, R3), comprenant les étapes de procédé suivantes :
- détermination d'une somme de contrôle de message cryptographique (GMIC) en utilisant la clé de groupe (KG) et détermination d'une somme de contrôle de nœud d'émission cryptographique (SMIC) en utilisant une clé de nœud d'émission distincte (KS) dans le nœud d'émission (S),
- envoi d'un message multidestinataire (30) avec la somme de contrôle de message (GMIC) et la somme de contrôle de nœud d'émission (SMIC) aux nœuds de réception (R1, R2, R3) du groupe (12),
- authentification du message multidestinataire (30) par la clé de groupe (KG) directement après réception du message multidestinataire (30) et traitement de certaines actions initiées par le nœud d'émission dans chaque nœud de réception (R1, R2, R3),
- réception de la clé distincte de nœud d'émission (KS) dans les nœuds de réception (R1, R2, R3) et authentification subséquente du nœud d'émission (S) par la clé distincte de nœud d'émission (KS) dans chaque nœud de réception (R1, R2, R3),
le message multidestinataire (30) et la clé de nœud d'émission (KS) associée étant reçus indépendamment l'un de l'autre dans le temps, et certaines actions initiées par le nœud d'émission (S) étant annulées si le nœud d'émission (S) est reconnu comme incertain suite à l'authentification temporellement retardée du nœud d'émission.

2. Procédé selon la revendication 1, dans lequel une valeur d'initialisation (IV) identique est utilisée pour calculer la somme de contrôle de message cryptographique (GMIC) que pour calculer la somme de contrôle de nœud d'émission (SMIC).

3. Procédé selon la revendication 1 ou 2, dans lequel la clé de nœud d'émission (KS) est transmise par le nœud d'émission (S) aux nœuds de réception (R1, R2, R3).

4. Procédé selon la revendication 1 ou 2, dans lequel la clé de nœud d'émission (KS) est transmise aux nœuds de réception (R1, R2, R3) par un dispositif de gestion de clé (SMN) disposé à part.

5. Procédé selon l'une des revendications 1 à 4, dans lequel la clé de nœud d'émission (KS) est fournie aux nœuds de réception (R1, R2, R3) pendant une période de validité (T) de la clé de nœud d'émission (KS).

6. Procédé selon l'une des revendications 1 à 4, dans lequel la clé de nœud d'émission (KS) est fournie aux nœuds de réception (R1, R2, R3) après écoulement d'une période de validité (T) de la clé de nœud d'émission (KS).

7. Procédé selon la revendication 6, dans lequel une somme de contrôle de nœud d'émission intérimaire (ISMICi) est établie pendant une période de validité (T) de la clé de nœud d'émission (KS) sans tenir compte de la clé de nœud d'émission (KS) du message multidestinataire (30) à transmettre et d'une valeur d'initialisation (IV), ensuite respectivement du message multidestinataire (30) à transmettre et de la somme de contrôle de nœud d'émission intérimaire (ISMICi-1) moyennant une fonction de hachage (H), et seulement pour le dernier message multidestinataire transmis pendant la période de validité (T), la somme de contrôle de nœud d'émission (SMIC) est établie par une fonction de hachage cryptographique (HMAC) et la clé de nœud d'émission (KS) du message multidestinataire (30) à transmettre et de la somme de contrôle du nœud d'émission (ISMICi-1) précédemment émise, seule la dernière somme de contrôle de nœud d'émission reçue étant stockée dans le nœud de réception (R1).

8. Procédé selon la revendication 6, dans lequel les messages multidestinataires (30) transmis pendant une période de validité (T) d'une clé de nœud d'émission (KS) sont stockés par un arbre de hachage (40) dans les nœuds de réception (R1), les feuilles (201, 202, 203, 204) de l'arbre de hachage (40) étant les valeurs de hachage (H1, H2, ..., Hn-1, Hn) des messages multidestinataires transmis (N1, N2, ..., Nn) calculées par une fonction de hachage, seule la dernière valeur de hachage (Hm) étant constituée par une fonction de hachage cryptographique.

9. Procédé selon l'une des revendications 5 à 8, dans lequel le moment de la mise à disposition de la clé de nœud d'émission (KS) est choisi en fonction de la sécurité des nœuds de réception (R1, R2, R3).

10. Procédé selon l'une des revendications 3 à 9, dans lequel la clé de nœud d'émission (KS) est transmise sous forme numériquement signée.

11. Procédé selon l'une des revendications 3 à 10, dans lequel la clé de nœud d'émission (KS) est transmise via une connexion de sécurité point à point entre le nœud d'émission (S) et les nœuds de réception (R1, R2, R3) ou entre le dispositif de gestion des clés (SMN) et les nœuds de réception (R1, R2, R3).

12. Procédé selon l'une des revendications 1 à 11, dans lequel la clé de nœud d'émission (KS) est constituée par un élément d'une chaîne de hachage.

13. Procédé selon l'une des revendications 7 à 12, dans lequel le nœud de réception (R1, R2, R3) vérifie l'ensemble ou partie des messages reçus (N1, N2, .., Nn) pendant la période de validité (T) d'une clé de nœud d'émission (KS) choisis soit de manière aléatoire, soit en fonction de critères de contenu spécifiques.

14. Procédé selon l'une des revendications 7 à 12, dans lequel le nœud de réception (R1, R2, R3) accepte les messages (N1, N2, ..., Nn) en fonction de leur type de message uniquement après vérification de la somme de contrôle du nœud d'émission (SMIC).

15. Procédé selon l'une des revendications 1 à 14, dans lequel un nœud de réception (R1, R3) qui établit un résultat de contrôle négatif en informe le reste des nœuds de réception (R1, R2, R3) du résultat de contrôle.

16. Système de communication de groupe protégée comportant une autorisation de l'émetteur comportant un groupe (12) de nœuds d'émission et de réception (S, R1, R2, R3),
chaque nœud d'émission (S) comportant :
- une unité de stockage (21) configurée pour stocker une clé de groupe (KG),
- une unité cryptographique (22) configurée pour déterminer une somme de contrôle de message cryptographique (GMIC) en utilisant la clé de groupe (KG) et une somme de contrôle de nœud d'émission cryptographique (SMIC) en utilisant une clé de nœud d'émission distincte (KS), et
- une unité d'émission (23) configurée pour envoyer un message multidestinataire avec la somme de contrôle de message (GMIC) et la somme de contrôle de nœud d'émission (SMIC) aux nœuds de réception (R1, R2, R3) du groupe (12) ;
chaque nœud de réception (R1, R2, R3) comportant :
- une unité de stockage (21) configurée pour stocker une clé de groupe (KG),
- une unité de réception (25) configurée pour recevoir le message multidestinataire et la clé de nœud d'émission (KS) distincte, et
- une unité d'authentification (23) conçue pour authentifier le message multidestinataire directement après sa réception par la clé de groupe (KG) de traiter certaines actions initiées par le nœud d'émission et d'authentifier le nœud d'émission (S) par la clé de nœud d'émission distincte (KS),
l'authentification du message multidestinataire et l'authentification du nœud d'émission (S) étant effectuées indépendamment l'un de l'autre dans le temps, et certaines actions initiées par le nœud d'émission (S) étant annulées si le nœud d'émission (S) est reconnu comme incertain par suite de l'authentification temporellement retardée du nœud d'émission.

17. Système selon la revendication 16, comportant un dispositif de gestion de clé (SMN) disposé à part conçu pour envoyer une clé de nœud d'émission (KS) aux nœuds de réception (R1, R2, R3) et/ou aux nœuds d'émission (S).

18. Logiciel informatique comportant des instructions de programme pour réaliser le procédé selon les revendications 1 à 15.

19. Support de données informatiques stockant le logiciel informatique selon la revendication 18.
